# EUROPÄISCHE PATENTSCHRIFT

(11) **EP 2 049 038 B1**
(45) Veröffentlichungstag und Bekanntmachung des Hinweises auf die Patenterteilung: **11.04.2012**
(21) Anmeldenummer: 07786315.7
(22) Anmeldetag: 25.07.2007
(51) Int. Cl.: A61C 1/00, A61C 19/00

(54) **HANDSTÜCK FÜR DAS AUFBRINGEN EINER LASERSTRAHLUNG AUF EINEN VORBESTIMMTEN BEREICH**
HANDPIECE FOR APPLYING LASER RADIATION TO A PREDETERMINED AREA
POIGNÉE POUR APPLIQUER UN RAYONNEMENT LASER SUR UNE ZONE PRÉDÉTERMINÉE

(30) Priorität: 08.08.2006 DE 102006037300
(43) Veröffentlichungstag der Anmeldung: 22.04.2009
(73) Patentinhaber: elexxion AG, 78315 Radolfzell (DE)
(72) Erfinder: ERNST, Holger, 78351 Ludwigshafen (DE)
(74) Vertreter: Arat, Dogan
(86) Internationale Anmeldenummer: PCT/EP2007/006590
(87) Internationale Veröffentlichungsnummer: WO 2008/017380

(56) Entgegenhaltungen:
- EP-A1- 0 582 896
- WO-A-88/09192
- WO-A-99/22667
- WO-A-02/080808
- DE-A1- 4 212 393
- DE-A1- 19 510 939
- US-A- 5 616 141
- US-A- 6 102 696
- US-A1- 2002 097 400

## Beschreibung

Die Erfindung betrifft ein Handstück für das Aufbringen einer Laserstrahlung auf einen vorbestimmten Bereich, insbesondere des menschlichen Körpers, insbesondere im Zahnbereich, wobei ein Laserstrahl in einem Strahlengang von einem Eintritt zu einem Austritt geführt ist, wobei das Handstück zumindest im Bereich des Austritts von einem Schutzmantel umgeben ist und wobei der Austritt mit einem für die Laserstrahlung transparenten Fenster besetzt ist, Der Schutzmantel weist dabei im Bereich des Fensters zusätzlich ein Schutzfenster auf, welches ebenfalls für die Laserstrahlung transparent ist.

### Stand der Technik

Die vorliegende Erfindung ist auf ein medizinisches oder dentales Handstück für die Durchführung von Behandlungen gerichtet, welche die Verwendung von Laserstrahl einschliessen. Derartige Behandlungen umfassen unter anderem Schneiden, Verdampfen, Koagulieren, Sterilisieren sowie Hellungsförderungsverfahren.

Ein entsprechendes Handstück ist beispielsweise in der DE 195 10 939 B4 gezeigt. Bei diesem Handstück tritt ein gepulster Laserstrahl durch ein Austrittsfenster im Kopf des Laserhandstücks aus und trifft focussiert auf den zu behandelnden Bereich auf.

Bei derartigen medizinischen Handstücken müssen die Teile, die in Patientenkontakte gelangen, entweder sterilisierbar oder Einwegkomponenten sein. Aus diesem Grunde bestehen Handstücke für andere Anwendungen aus mehreren Teilen, die vom Arzt oder der Arzthelferin getrennt werden können. Die Teile, die in Patientenkontakt gelangen, werden dann sterilisiert. Bei Handstücken für die Laseranwendung ist dies infolge der Anordnung der Optik nicht ohne weiteres möglich. Optische Komponenten des Strahlengangs liegen beim Anwender zumindest zeitweise offen und können verunreinigt werden. Verunreinigungen führen zur Beschädigung und Zerstörung der optische Komponenten und damit zum Ausfall des Übertragungssystems des Lasers. Des Weiteren werden kritische optische Komponenten mit In den Sterilisationsprozess einbezogen, was eine weitere mögliche Schädigung, indirekt über mögliche Kondensation von Wasser auf optischen Elementen, beziehungsweise direkt, möglich macht.

In der US 2002/0097400 A1 wird eine Vorrichtung und ein Verfahren zum Messen von optischen Eigenschaften eines Objektes beschrieben, mit Hilfe welcher beispielsweise die Farbe von Zähnen ermittelt werden kann.

In der US 6 102 696 A wird ein Apparat für zahnmedizinische Behandlungen dargestellt. Das distale Ende wird mit einem lichtdurchlässigen Überzug geschützt.

Ein entsprechendes Handstück wird in der EP 0 582 896 A1 gezeigt Am Handstück werden mittels geeigneter Haltemittel Zuleitungsrohre für abrasive Partikel, Luft und Wasser befestigt.

In der DE 42 12 393 A1 wird eine Lichtleiterlaserbehandlungsvorrichtung beschrieben. Es ist eine Schutzrohranordnung vorgesehen, die ein auf den vorderen Endteil der Laderfaser abnehmbar aufgepasstes flexibles Schutzrohr und einen am vorderen Ende des flexiblen Schutzrohres sitzenden lichtdurchlässigen Dichtungsendabschnitt aufweist.

Auch die WO 99/2267 A beschreibt ein vergleichbares Handstück, das zum Schutz vor Infektionen, zum Schutz optischer Einrichtungen und dgl. mit Schutzmänteln versehen ist. Hierbei handelt es sich um ein Einwegprodukt.

Ein entsprechendes Handstück ist auch in der US-A-5616141 gezeigt. Bei diesem Handstück wird ein Laserstrahl in einem Strahlengang von einem Eintritt zu einem Austritt geführt, wobei das Handstück zumindest im Bereich des Austritts von einem Schutzmantel umgeben ist.

### Aufgabe

Aufgabe der vorliegende Erfindung ist es, ein derartiges Handstück vor Verunreinigungen und Beschädigungen zu sichern und die in Kontakt mit dem Patienten gelangenden Teile autoklavierbar zu machen.

### Lösung der Aufgabe

Die Aufgabe wird durch ein Handstück gemäß Anspruch 1 gelöst.

Zur Lösung der Aufgabe führt, dass das Fenster und/oder das Schutzfenster aus Saphir bestehen.

Hierdurch wird ein gegen Verschmutzung geschützter, abgeschlossener Bereich im Handstück erzeugt, den der Anwender bei sachgemässem Gebrauch nicht öffnen und damit auch nicht verunreinigen kann. In diesen befinden sich alle kritischen optischen Elemente. Der erfindungsgemässe Schutzmantel umgibt diesen Bereich, der in Patientenkontakt kommt, wodurch eine biologische Kontamination ausgeschlossen wird. Bevorzugt ist dieser Schutzmantel von dem Handstück abtrennbar und selbstständig autoklavierbar.

Der Austritt des Strahlengangs im Handstück ist von einem Fenster verschlossen. Bei diesem Fenster handelt es sich um ein für den Laserstrahl transparentes Fenster aus Saphir.

Auch der Schutzmantel besitzt im Bereich des Fensters des Handstücks ein Schutzfenster, welches ebenfalls aus Saphir besteht. Damit wird gewährleistet, dass der Laserstrahl sowohl durch das Fenster als auch durch das Schutzfenster austreten und auf den zu behandelnden Bereich auftreffen kann.

Bevorzugt befindet sich in dem Handstück noch eine Leitung für ein Gas und/oder auch eine Leitung für eine Flüssigkeit. Denkbar ist auch, dass eine Leitung für ein Gas -/Flüssigkeitgemisch vorgesehen ist. Das Gas kann aber auch mit der Flüssigkeit in einer Mischkammer in dem Handstück selbst gemischt werden. Auf diese Weise kann beispielsweise ein Luft - Wasser - Spray erzeugt werden. Für die Führung der Leitung gibt es verschiedene Möglichkeiten. Beispielsweise können die Leitungen bzw. eine Leitung nach der Mischkammer an entsprechenden Düsenöffnungen im Schutzmantel ausmünden. Durch diese Düsenöffnungen kann dann das Spray in das Bearbeitungsgebiet eingebracht werden. Denkbar ist auch die Führung im Schutzmantel, wobei sich dann Leitungen und/oder Mischkammern bzw. Düsenöffnungen im Schutzmantel befinden. Des weiteren ist eine externe Führung möglich, Mischkammer und Düse sind in diesem Fall entweder im Schutzmantel oder ebenfalls extern angeordnet.

Bevorzugt wird im Übrigen eine Laserstrahlung, die in einem Wellenlängenbereich von 3µm+/- 0,5µm liegt. Bei dem geführten Laserstrahl handelt es sich um denjenige eines Erbiumlasers.

Falls es notwendig sein soll, kann er Laserstrahl in dem Strahlengang durch ein beliebiges optisches Element umgelenkt werden. Beispielsweise kann eine Umlenkung um 85 ° bis 95 ° erfolgen.

Bevorzugt wird der Laserstrahl in einem räumlich vom Handstück getrennten Lasersystem generiert und über eine optische Übertragungstrecke in das Handstück eingebracht. Bei der optische Übertragungstrecke handelt es sich um eine Kombination aus optischen Umlenkelementen und Freistrahlabschnitten. Bei der optischen Übertragungstrecke kann es sich um einen Spiegelgelenkarm handelt. Die optische Übertragungstrecke kann aber auch ein optischer Hohlleiter, ein Flüssigkeitslichtleiter oder eine Lichtleitfaser sein. Allerdings wird auch vom Erfindungsgedanken umfasst, dass der Laserstrahl in einem räumlich nicht vom Handstück getrennten Lasersystem generiert wird.

In einem bevorzugten Ausführungsbeispiele sollte mindestens ein Teil des Handstücks um die Längsachse des Handstücks drehbar sein. Hierdurch wird das Handling des Handstücks verbessert.

Das erfindungsgemässe Handstück bietet sich vor allem bei der Behandlung von biologischem Gewebe an. Es soll vor allem im medizinischen Bereich und hier im zahnmedizinischen Bereich Anwendung finden. Sollte es sich als notwendig erweisen, kann noch ein Leuchtelement an dem Handstück angeordnet werden, welches die zu behandelnden Regionen erhellt. Für die Anordnung des Leuchtelementes und der entsprechenden elektrischen Leitungen sind mehrere Möglichkeiten denkbar. Beispielsweise kann sich die elektrische Leitung und das Lichtelement in dem Handstück selbst befinden, im Schutzmantel ist ein transparentes Fenster vorgesehen. Das Leuchtelement kann aber auch im Schutzmantel vorgesehen werden, wobei dann Anschluss zu elektrischen Leitungen in dem Handstück vorgesehen sind. Ferner besteht die Möglichkeit, dass die elektrischen Leitung extern geführt sind und sich das Leuchtelement im Schutzmantel oder extern befindet.

### Figurenbeschreibung

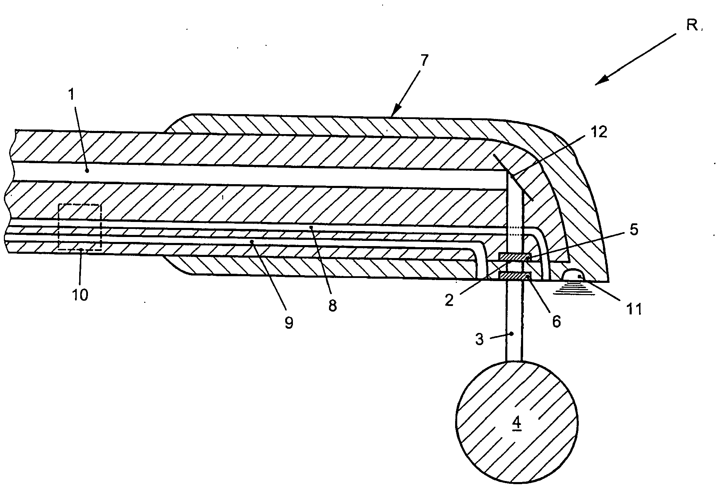

Weitere Vorteile, Merkmale und Einzelheiten der Erfindung ergeben sich aus der nachfolgenden Beschreibung bevorzugte Ausführungsbeispiele sowie anhand der Zeichnung; diese zeigt in ihrer einzigen Figur einen schematisch dargestellten teilweisen Längsschnitt durch ein erfindungsgemässe Handstück R.

Von beispielsweise einem medizinischen Handstück R ist nur ein vorderer Bereich dargestellten, der von einem Strahlengang 1 durchzogen ist. Dieser Strahlengang 1 besitzt einen nicht näher gezeigten Eintritt und einen Austritt 2, durch den ein Laserstrahl 3 auf einen zu behandelnden Bereich 4 gerichtet ist. Dabei wird der Laserstrahl 3 in dem Strahlengang 1 durch einen Spiegel 12 umgelenkt.

In dem Austritt 2 sitzt ein für den Laserstrahl transparentes Fenster 5, aus Saphir. Diesem Fenster 5 aus Saphir ist ein Schutzfenster 6, ebenfalls aus Saphir, in einem Schutzmantel 7 zugeordnet, sodass der Laserstrahl 3 sowohl das Fenster 5 als auch das Schutzfenster 6 durchdringen muss. Das Fenster oder Schutzfenster muss nicht eben sein, es kann auch kegelförmig oder prismenartig ausgestaltet sein. Es muss lediglich den Laserstrahl durchlassen.

Der Schutzmantel 7 umschliesst den vorderen Bereich des Handstück R so, dass der Strahlengang 1 sowohl gegen Verunreinigungen geschützt ist, als auch das Handstück in diesem Bereich autoklavierbar ist. Ein Eindringen von externem Staub und Wasser wird vermieden. Zu diesem Zweck besteht der Schutzmantel 7 aus einem entsprechenden Material, welches das Handstück umschliesst und vom Handstück entfernbar ist.

Neben dem Strahlengang 1 ist im Handstück R sowohl eine Zuleitung 8 für ein Gas als auch eine Zuleitung 9 für eine Flüssigkeit vorgesehen. Gestrichelt angedeutet ist ferner eine Mischkammer 10, in der Gas mit Flüssigkeit gemischt werden kann.

Des Weiteren ist an der Spitze des Handstücks R in dem Schutzmantel 7 ein Leuchtelemente 11 vorgesehen, über welches der Bereich 4 erhellt werden kann.

### Bezugszeichenliste

- 1:: Strahlengang
- 2:: Austritt
- 3:: Laserstrahl
- 4:: Bereich
- 5:: Fenster
- 6:: Schutzfenster
- 7:: Schutzmantel
- 8:: Zuleitung
- 9:: Zuleitung
- 10:: Mischkammer
- 11:: Leuchtelement
- 12:: Spiegel
- R :: Handstück

## Patentansprüche

1. Handstück (R) für das Aufbringen einer Laserstrahlung auf einen vorbestimmten Bereich (4), insbesondere des menschlichen Körpers, insbesondere im Zahnbereich, zur Behandlung von biologischem Gewebe, wobei ein Laserstrahl (3) in einem Strahlengang (1) von einem Eintritt zu einem Austritt (2) geführt ist, wobei das Handstück (R) zumindest im Bereich des Austritts (2) von einem Schutzmantel (7) umgeben ist, wobei der Austritt (2) mit einem für die Laserstrahlung transparenten Fenster (5) besetzt ist, wobei der Schutzmantel (7) im Bereich des Fensters (5) ein Schutzfenster (6) aufweist, welches für die Laserstrahlung transparent ist,
**dadurch gekennzeichnet,**
**dass**. das Fenster (5) und/oder das Schutzfenster (6) aus Saphir bestehen.

2. Handstück nach Anspruch 1, **dadurch gekennzeichnet, dass** der Schutzmantel (7) abtrennbar ist.

3. Handstück nach Anspruch 1 oder 2, **dadurch gekennzeichnet, dass** der Schutzmantel (7) autoklavierbar ist.

4. Handstück nach wenigstens einem der Ansprüche 1 bis 3, **dadurch gekennzeichnet, dass** neben dem Strahlengang (1) auch eine Leitung (8) für Gas und/oder eine Leitung (9) für Flüssigkeit vorgesehen ist.

5. Handstück nach wenigstens einem der Ansprüche 1 bis 4, **dadurch gekennzeichnet, dass** neben dem Strahlengang (1) eine Leitung für ein Gas-/Flüsslgkeitsgemisch vorgesehen ist.

6. Handstück nach Anspruch 4 oder 5, **dadurch gekennzeichnet**, das die Flüssigkeit zumindest teilweise Wasser beinhaltet.

7. Handstück nach Anspruch 5 oder 6, **dadurch gekennzeichnet, dass** in dem Handstück eine Mischkammer (10) vorgesehen ist.

8. Handstück nach einem der Ansprüche 5 bis 7, **dadurch gekennzeichnet, dass** das Gas - Flüssigkeit - Gemisch zumindest teilweise Umgebungsluft enthält.

9. Handstück nach wenigstens einem der Ansprüche 5 bis 8, **dadurch gekennzeichnet, dass** das Gas - Flüssigkeit - Gemisch ein Luft - Wasser - Spray ist.

10. Handstück nach wenigstens einem der Ansprüche 1 bis 9, **dadurch gekennzeichnet, dass** der Strahlengang (3) um einen Winkel, bevorzugt um 85° bis 94° umgelenkt wird.

11. Handstück nach wenigstens einem der Ansprüche 1 bis 10, **dadurch gekennzeichnet, dass** die Laserstrahlung in einem räumlich vom Handstück getrennten Lasersystem generiert und über eine optische Übertragungsstrecke in das Handstück eingebracht ist.

12. Handstück nach Anspruch 11, **dadurch gekennzeichnet, dass** die optische Übertragungsstrecke eine Kombination aus optischen Umlenkelementen und Freistrahlabschnitten ist.

13. Handstück nach Anspruch 12, **dadurch gekennzeichnet, dass** es sich bei der optischen Übertragungsstrecke um einen Spiegelgelenkarm handelt.

14. Handstück nach einem der Ansprüche 11 bis 13, **dadurch gekennzeichnet, dass** es sich bei der optischen Übertragungsstrecke um einen optischen hohe Leiter handelt.

15. Handstück nach einem der Ansprüche 11 bis 13, **dadurch gekennzeichnet, dass** es sich bei der optischen Übertragungsstrecke um einen Flüssigkeitslichtleiter handelt.

16. Handstück nach einem der Ansprüche 11 bis 13, **dadurch gekennzeichnet, dass** es sich bei der optischen Übertragungsstrecke um eine Lichtleitfaser handelt.

17. Handstück nach wenigstens einem der Ansprüche 1 bis 16, **dadurch gekennzeichnet, dass** dem Austritt ein Lichtelement (11) zugeordnet Ist.

## Claims

1. A handpiece (R) for applying laser radiation to a predetermined region (4), in particular of the human body, in particular in the dental region, for the treatment of biological tissue, a laser beam (3) being guided in a beam path (1) from an entrance to an exit (2), the handpiece (R), at least in the region of the exit (2), being surrounded by a protective casing (7), the exit (2) being occupied by a window (5) which is transparent to the laser radiation, the protective casing (7) having a protective window (6) in the region of the window (5), which protective window is transparent to the laser radiation, **characterised in that**
the window (5) and/or the protective window (6) is/are made of sapphire.

2. A handpiece according to Claim 1, **characterised in that** the protective casing (7) is separable.

3. A handpiece according to Claim 1 or 2, **characterised in that** the protective casing (7) is autoclavable.

4. A handpiece according to at least one of Claims 1 to 3, **characterised in that** a line (8) for gas and/or a line (9) for liquid is also provided in addition to the beam path (1).

5. A handpiece according to at least one of Claims 1 to 4, **characterised in that** a line for a gas/liquid mixture is provided in addition to the beam path (1).

6. A handpiece according to Claim 4 or 5, **characterised in that** the liquid at least partially contains water.

7. A handpiece according to Claim 5 or 6, **characterised in that** a mixing chamber (10) is provided in the handpiece.

8. A handpiece according to one of Claims 5 to 7, **characterised in that** the gas/liquid mixture at least partially contains ambient air.

9. A handpiece according to at least one of Claims 5 to 8, **characterised in that** the gas/liquid mixture is an air/water spray.

10. A handpiece according to at least one of Claims 1 to 9, **characterised in that** the beam path (3) is deflected by an angle, preferably by 85° to 94°.

11. A handpiece according to at least one of Claims 1 to 10, **characterised in that** the laser radiation is generated in a laser system which is spatially separated from the handpiece and is introduced into the handpiece via an optical transmission path.

12. A handpiece according to Claim 11, **characterised in that** the optical transmission path is a combination of optical deflecting elements and free-beam sections.

13. A handpiece according to Claim 12, **characterised in that** the optical transmission path is an articulated mirror arm.

14. A handpiece according to one of Claims 11 to 13, **characterised in that** the optical transmission path is an optical high conductor.

15. A handpiece according to one of Claims 11 to 13, **characterised in that** the optical transmission path is a liquid light guide.

16. A handpiece according to one of Claims 11 to 13, **characterised in that** the optical transmission path is an optical fibre.

17. A handpiece according to at least one of Claims 1 to 16, **characterised in that** a light element (11) is assigned to the exit.

## Revendications

1. Pièce à main (R) pour l'application d'un rayonnement laser sur une zone prédéterminée (4), en particulier du corps humain, en particulier dans le domaine dentaire, pour le traitement de tissus biologiques, un rayonnement laser (3) étant guidé dans un trajet de rayons (1) d'une entrée à une sortie (2), la pièce à main (R) étant entourée, au moins dans la zone de la sortie (2), d'une enveloppe de protection (7), la sortie (2) étant occupée par une fenêtre (5) transparente au rayonnement laser, l'enveloppe de protection (7) présentant, à l'endroit de la fenêtre (5), une fenêtre de protection (6) qui est transparente au rayonnement laser,
**caractérisée par le fait**
**que** la fenêtre (5) et/ou la fenêtre de protection (6) sont réalisées en saphir,

2. Pièce à main selon la revendication 1, **caractérisée par le fait que** l'enveloppe de protection (7) est séparable.

3. Pièce à main selon la revendication 1 ou 2, **caractérisée par le fait que** l'enveloppe de protection (7) autoclavable.

4. Pièce à main selon au moins l'une des revendications 1 à 3, **caractérisée par le fait qu'**il est prévu, outre le trajet de rayons (1), également un conduit à gaz (8) et/ou un conduit à liquide (9).

5. Pièce à main selon au moins l'une des revendications 1 à 4, **caractérisée par le fait qu'**il est prévu, outre le trajet de rayons (1), un conduit pour un mélange de gaz-liquide.

6. Pièce à main selon la revendication 4 ou 5, **caractérisée par le fait que** le liquide contient au moins partiellement de l'eau.

7. Pièce à main selon la revendication 5 ou 6, **caractérisée par le fait que** dans la pièce à main est prévue une chambre de mélange (10).

8. Pièce à main selon l'une des revendications 5 à 7, **caractérisée par le fait que** le mélange de gaz-liquide contient au moins partiellement de l'air ambiant.

9. Pièce à main selon au moins l'une des revendications 5 à 8, **caractérisée par le fait que** le mélange de gaz-liquide est un spray air-eau.

10. Pièce à main selon au moins l'une des revendications 1 à 9, **caractérisée par le fait que** le trajet de rayons (3) est retourné selon un angle, de préférence de 85° à 94°.

11. Pièce à main selon au moins l'une des revendications 1 à 10, **caractérisée par le fait que** le rayonnement laser est généré dans un système laser séparé spatialement de la pièce à main et est introduit dans la pièce à main via un trajet de transmission optique,

12. Pièce à main selon la revendication 11, **caractérisée par le fait que** le trajet de transmission optique est une combinaison d'éléments de retournement optique et de segments de rayonnement libre.

13. Pièce à main selon la revendication 12, **caractérisée par le fait qu'**il s'agit, pour le trajet de transmission optique, d'un bras articulé à miroir.

14. Pièce à main selon l'une des revendications 11 à 13, **caractérisée par le fait qu'**il s'agit, pour le trajet de transmission optique, d'un conducteur optique haut.

15. Pièce à main selon l'une des revendications 11 à 13, **caractérisée par le fait qu'**il s'agit, pour le trajet de transmission optique, d'un conducteur de lumière liquide.

16. Pièce à main selon l'une des revendications 11 à 13, **caractérisée par le fait qu'**il s'agit, pour le trajet de transmission optique, d'une fibre optique.

17. Pièce à main selon au moins l'une des revendications 11 à 16, **caractérisée par le fait qu'**à la sortie est associé un élément lumineux (11).
